# NEUE EUROPÄISCHE PATENTSCHRIFT

(11) **EP 0 164 518 B2**
(45) Veröffentlichungstag und Bekanntmachung des Hinweises auf die Entscheidung über den Einspruch: **31.07.1996**
(45) Hinweis auf die Patenterteilung: 16.05.1990
(21) Anmeldenummer: 85104283.8
(22) Anmeldetag: 09.04.1985
(51) Int. Cl.: G11B 5/704, B32B 27/36, G11B 5/64, G11B 5/848

(54) **Verfahren zur Entfernung von Kratzern auf einer Polyersterfolie**
Method for the elimination of scratches on a polyester film
Procédé d'élimination des rayures sur une feuille de polyester

(30) Priorität: 16.04.1984 DE 3414309
(43) Veröffentlichungstag der Anmeldung: 18.12.1985
(73) Patentinhaber: HOECHST AKTIENGESELLSCHAFT, 65926 Frankfurt am Main (DE)
(72) Erfinder: Hensel, Hartmut, Dr., D-6229 Schlangenbad 3 (DE); Monzer, Helmut, verstorben (DE)

(56) Entgegenhaltungen:
- EP-A- 035 835
- EP-A- 0 026 006
- EP-A- 0 053 498
- EP-A- 0 072 626
- GB-A- 1 465 973
- GB-A- 1 517 205

## Beschreibung

Die Erfindung betrifft ein Verfahren zur Entfernung von Kratzern, die während der Weiterverarbeitung auf einer biaxial orientierten, thermofixierten Mehrschichtfolie aus thermoplastischen Polyestermaterialien entstanden sind, wobei die Folie auf wenigstens einer Oberfläche einer Basisschicht aus thermoplastischem Polyester A eine Deckschicht aus einem Polyester B aufweist, der einen niedrigeren Schmelzpunkt besitzt als der Polyester A.

Kratzerfreie Folien werden in besonders hoher Qualität für optische Anwendungsgebiete benötigt, worunter insbesondere Folien für reprographische Anwendungen oder Folien für Fensterglaskaschierung zu verstehen sind, aber es werden auch zur Aufbringung von Metallschichten oder Magnetschichten Trägerfolien benötigt, die im wesentlichen frei sein sollen von störenden Kratzern.

Um kratzerfreie Folien herzustellen, wird normalerweise eine Produktionstechnologie angewendet, bei der während des gesamten Herstellungsprozesses der Folie eine Relativbewegung zwischen der Folienbahn und irgendwelchen Walzen der Maschine unterbunden wird. Ferner ist auch eine Reibung zwischen den einzelnen Folienlagen auf dem Wickel absolut zu vermeiden. Durch diese Forderungen ist es notwendig, kostspielige Zusatzaggregate an den Produktionsmaschinen anzubringen, und trotzdem kommt es immer wieder, insbesondere bei der Längsstreckung über Walzen, zur Verkratzung der Folien und damit zu unbrauchbaren Produkten.

Auch bei der Weiterverarbeitung der Folien beim Kunden entstehen Kratzer, die den Folieneinsatz unmöglich machen.

Aus dem Dokument EP-B-0 035 835 ist es bekannt, die Handhabung der Folien,insbesondere beim Aufwickeln und Weiterverarbeiten, zu verbessern. Dieses wird dadurch erreicht, daß in die Deckschicht Teilchen eingearbeitet werden, deren mittlerer Durchmesser größer ist als die Dicke dieser Deckschicht. Die Teilchen ragen somit aus der Deckschicht hervor und ergeben die erwünschten Antiblockeigenschaften. Kratzerfreie Folien sind nicht Gegenstand der EP-B-0 035 835.

Die vorliegende Erfindung hat es sich zur Aufgabe gemacht, ein Verfahren zu schaffen, das es ermöglicht, die bei der Weiterverarbeitung der Folie entstandenen Kratzer zu entfernen.

Die vorstehend genannte Aufgabe wird erfindungsgemäß durch ein Verfahren der eingangs genannten Gattung gelöst, welches dadurch gekennzeichnet ist, daß die mit Kratzern versehene Folie einer Wärmebehandlung bei einer Temperatur im Bereich von 70 bis 200 °C unterzogen wird, wodurch auf der Oberfläche der Deckschicht keine Kratzer von mehr als 3,0 mm Längsausdehnung und mehr als 10 µm Querausdehnung vorhanden sind.

In Ausgestaltung des Verfahrens nach Anspruch 2 weist der Polyester A einen Schmelzpunkt im Bereich von 230 bis 270 °C und der Polyester B einen Schmelzpunkt im Bereich von 120 bis 230 °C auf.

Des weiteren ist der thermoplastische Polyester A der Basisschicht Polyethylenterephthalat, dem gegebenenfalls zur Verbesserung der Gleitfähigkeitseigenschaften in feiner Verteilung feste Teilchen zugesetzt werden können, insbesondere in einer Menge von 0 bis 30 Gew.-%, bevorzugt 0 bis 2 Gew.-%, jeweils bezogen auf das Gewicht des die Basisschicht bildenden Polyethylenterephthalats, wobei die mittlere Teilchengröße der festen Teilchen im Bereich von 0,3 bis 20 µm, bevorzugt von 0,5 bis 10 µm, liegt.

Die Teilchen können aus einem anorganischen Material oder aber auch aus einem organische Material sein, es können aber auch Präzipitate von Katalysatorresten oder Mischungen aller drei Teilchenarten sein. Beispiele hierfür sind ein oder mehrere der folgenden Materialien:

Siliciumdioxid wie z.B. pyrogenes Siliciumdioxid, Aerogelsiliciumdioxid, natürlichen Siliciumdioxid, ausgefälltes Siliciumdioxid und Diatomeenerdensiliciumdioxid; synthetische und natürliche Silikate; natürliches und pyrogenes Aluminiumoxid; Calciumcarbonat; Bariumsulfat; Titandioxid; Ruß; Metallteilchen wie z.B. solche aus Aluminium, Eisen usw.; magnetische Teilchen wie z.B. Bariumferrit; Teilchen aus polymeren Materialien wie z.B. Plastomere, Elastomere, Duromere.

Die festen Teilchen haben keinen Einfluß auf den Schmelzbereich des Polyethylenterephthalats der Basisschicht, welcher bevorzugt im Bereich von 240 bis 260 °C liegt.

Dem Polyester A können ferner zur Verbesserung der Gleiteigenschaften organische Additive mit einem niedrigen Schmelzpunkt (im Vergleich zu Polyester A) zugesetzt werden, insbesondere in einer Menge von 0 bis 10 Gew.-%, bevorzugt in einer Menge von 0 bis 5 Gew.-%. Beispiele hierfür sind ein oder mehrere der folgenden Materialien; Glycerinmono-, -di oder -triester, Fettsäuren, Ester von Fettsäuren, gesättigte organische Säuren, ihre Ester und Salze, gesättigte und ungesättigte Organopolysiloxane. Solche Additive können auch die Kristallinität des Polyesters beeinflussen.

Die Schichtdicke der Basisschicht liegt zweckmäßigerweise zwischen 2 und 500 µm, bevorzugt zwischen 5 und 150 µm, besonders bevorzugt zwischen 8 und 100 µm.

In Ausführung des Verfahrens besteht der Polyester B der Deckschicht aus Polyethylenterephthalat- und Polyethylenisophthalateinheiten, wobei der Isophthalatanteil im Bereich von 5 bis 95 Gew.-% liegt, bezogen auf das Gesamtgewicht des Copolyesters, bevorzugt von 5 bis 30 Gew.-%, besonders bevorzugt von 10 bis 20 Gew.-%.

Dabei liegt der Schmelzpunkt des Polyesters B der Deckschicht im Bereich von 190 bis 230 °C, bevorzugt von 190 bis 210 °C.

Auch in der Deckschicht können zur Verbesserung der Gleitfähigkeitseigenschaften der Folie in feiner Verteilung feste Teilchen eingelagert sein.

Die festen Teilchen können aus den gleichen Materialien bestehen, wie sie bereits für die Basisschicht A beschrieben sind, aber es müssen für Basisschicht und Deckschicht nicht immer die gleichen Teilchen verwendet werden, sondern es können für die Deckschicht Teilchen aus anderen Materialien verwendet werden als diejenigen, welche der Basisschicht einverleibt sind.

Die Menge an festen Teilchen, die in dem Polyester B der Deckschicht eingelagert sein können, liegt im Bereich von 0 bis 30 Gew.-%, bevorzugt von 0 bis 2,0 Gew.-%, jeweils bezogen auf das Gesamtgewicht des die Deckschicht bildenden Polyesters B. Der mittlere Teilchendurchmesser liegt dabei im Bereich von 0,1 bis 20 µm, bevorzugt von 0,2 bis 5 µm.

Auch in der Deckschicht können ferner zur Verbesserung der Gleiteigenschaften organische Additive mit einem niedrigen Schmelzpunkt (im Vergleich zu Polyester B) zugesetzt werden, insbesondere in einer Menge von 0 bis 10 Gew.-%, bevorzugt in einer Menge von 0 bis 5 Gew.-%. Beispiele hierfür sind ein oder mehrere der folgenden Materialien: Glycerinmono-, -di- oder -triester, Fettsäuren, Ester von Fettsäuren, gesättigte organische Säuren, ihre Ester und Salze, gesättigte und ungesättigte Organopolysiloxane. Solche Additive können auch die Kristallinität des Polyesters beeinflussen.

Die Schichtdicke der Deckschicht beträgt erfindungsgemäß wenigstens 0,01 µm, bevorzugt liegt sie zwischen 0,1 bis 100 µm, besonders bevorzugt zwischen 0,1 und 40 µm.

Die freie Oberfläche der Deckschicht, das ist die Oberfläche, die der Basisschicht abgewandt ist, weist keine Kratzer in den angegebenen Größenbereichen auf. Unter Kratzern sind im Rahmen der Erfindungsbeschreibung insbesondere Rillen, Furchen, Einkerbungen oder sonstige Verformungen der ansonsten im wesentlichen glatten Folienoberfläche zu verstehen, die eine Längenausdehnung von mindestens 3 mm, bevorzugt mindestens 1 mm, aufweisen und deren Querausdehnung mindestens 10 µm, bevorzugt mindestens 50 µm, beträgt. Derartige Kratzer sind bei Betrachtung der Folienoberfläche durch ein Mikroskop mit einer entsprechenden Vergrößerung deutlich zu erkennen.

In einer besonders bevorzugten Ausführungsform der Erfindung sind auf beiden Seiten der Basisschicht Deckschichten aufgebracht, wobei die jeweilige Zusammensetzung der Polyester der Deckschichten in den vorstehend angegebenen Bereichen unterschiedlich sein kann, genauso wie auch die auf den beiden Oberflächen der Basisschicht jeweils aufgebrachten Deckschichten unterschiedliche Schichtdicken aufweisen können, bevorzugt besitzt jedoch die Gesamtfolie eine symmetrischen Aufbau, bei dem beide Deckschichten gleiche zusammensetzung und gleiche Schichtdicken aufweisen.

Die nach dem erfindungsgemäßen Verfahren behandelte Mehrschichtfolie wird nach dem Extrusionsverfahren bzw. nach dem Coextrusionsverfahren hergestellt. Bei diesem Verfahren werden die die einzelnen Schichten der Trägerfolie bildenden Polymeren in getrennten Extrudern plastifiziert, zusammengeführt und dann mittels einer Düse auf eine Kühlwalze extrudiert und die unverstreckte Folie abgekühlt. Nach dem Abkühlen wird die Folie durch mehrfaches Verstrecken in Längs- und Querrichtung orientiert, thermofixiert, geschnitten und aufgewickelt.

Das wesentliche Merkmal des Herstellungsverfahrens ist darin zu sehen, daß die Hitzefixierung der Mehrschichtfolie nach der Streckung bei einer Temperatur, die im Bereich zwischen dem Schmelzpunkt des Polyesters A und dem Schmelzpunkt des Polyesters B liegt, durchgeführt wird. Bevorzugt wird die Folie nach der Hitzefixierung durch Abschrecken möglichst schnell auf Raumtemperatur gebracht, besonders bevorzugt in einem Zeitintervall von nicht mehr als 40 Sekunden auf eine Temperatur von maximal 70 °C.

Es hat sich gezeigt, daß sämtliche im Laufe der Folienproduktion eventuell erzeugten Kratzer auf der Folienoberfläche nach der Hitzefixierung verschwinden Das erklärt sich dadurch, daß die Hitzefixierung bei einer Temperatur durchgeführt wird, die höher liegt als die Schmelztemperatur des die Deckschicht bildenden Polyesters B. Durch das Aufschmelzen des Polyesters der Deckschichten verschwinden dabei alle eventuell vorhandenen Kratzer.

Durch das Aufschmelzen des Polyesters der Deckschicht(en) und das darauf erfolgende schnelle Abkühlen der Folie liegen die Polyester der Deckschichten im Zustand einer geringeren Kristallinität vor. Ein derartiger Zustand ist vergleichbar mit dem einer nicht verstreckten Vorfolie. Die Deckschichten sind dann sehr nachgiebig und gut verformbar, wobei sie sich aber jeweils nach der mechanischen Beanspruchung wieder in ihre alte Ausgangsposition zurückverformen. Ein solcher Zustand wird auch als duktil und/oder elastisch bezeichnet und ist das Gegenteil von hart und spröde.

Besonders überraschend hat sich gezeigt, daß bei den beschriebenen Mehrschichtfolien eine Entfernung von nachträglich auf die fertige Folie aufgebrachten Kratzern durch eine Wärmebehandlung bei einer Temperatur im Bereich von 70 bis 200 °C, bevorzugt von 70 bis 150 °C, möglich ist. Die erfindungsgemäße Wärmebehandlung liefert dem Weiterverarbeiter die Möglichkeit, wieder Folien mit vollkommen kratzerfreier Oberfläche zu erreichen, z.B. vor der Metallbedampfung oder vor dem Aufbringen weiterer Beschichtungen auf die Folie, falls neue Kratzer oder Beschädigungen durch Umrollen, Schneiden, Relativbewegungen auf Rollen etc. entstanden sind.

Durch die nachfolgenden Ausfühungsbeispiele soll die Erfindung noch näher erläutert werden. Die Prozentangaben sollen, falls nicht anders erwähnt, immer als Gew.-% verstanden werden. Die Schmelzpunkte werden im Differentialkalorimeter DTA 1090 von Du Pont ermittelt.

### Beispiele 1 bis 7

Ein Polyethylenterephthalat mit einem Schmelzpunkt von 255 °C (A) wurde in einem Extruder aufgeschmolzen und zusammen mit einem in einem zweiten Extruder aufgeschmolzenen Polyester (B), Copolyester, bestehend aus 18 Gew.-% Ethylenisophthalat und 82 Gew.-% Ethylenterephthalat mit einem Schmelzpunkt von 210 °C einer Breitschlitzdüse zugeführt, wobei der Polyester (B) mittels eines Zweischicht-Coextrusionsadapters einseitig auf das Polyethylenterephthalat (A) aufgebracht wurde. Der aus der Breitschlitzdüse austretende Schmelzefilm des Aufbaus AB von 120 µm Dicke (15 µm Schicht B, 105 µm Schicht A) wurde abgekühlt, aufgeheizt, längsgestreckt, quergestreckt und bei Temperatur von 120, 150, 170, 190, 210, 230 und 245 °C thermofixiert und abgekühlt. Bei Fixiertemperaturen im Bereich von 255 °C war wegen entstehender Abrisse eine Folienherstellung nicht möglich. Bei einer Betrachtung der Folien unter dem Mikroskop wurden folgende Beobachtungen gemacht:

**Tabelle 1**

| **Thermofixierung der Folie** | | **Kratzer unter dem Mikroskop** | |
|---|---|---|---|
| Biespiel | °C | Seite A | Seite B |
| 1 | 120 | + | + |
| 2 | 150 | + | + |
| 3 | 170 | + | + |
| 4 | 190 | + | + |
| 5 | 210 | + | - / erfindungsgemäß |
| 6 | 230 | + | - / erfindungsgemäß |
| 7 | 245 | + | - / erfindungsgemäß |
| + = Kratzer vorhanden - = keine Kratzer vorhanden | | | |

### Beispiel 8

Folien, hergestellt nach Beispielen 1 bis 7, wurden zusätzlich mit Stahlwolle beschädigt und danach auf einen Heiztisch gelegt, wobei die Veränderungen auf den Folienoberflächen unter einem Mikroskop beobachtet wurden. Dabei konnte festgestellt werden, daß die durch die Stahlwolle auf der Folienseite mit Polyester B (niedriger Schmelzpunkt) beschädigten Folien, die oberhalb des Schmelzpunktes von Polyester B thermofixiert wurden, oberhalb von etwa 100 °C wider kratzerfrei wurden. Demgegenüber blieben die Kratzer, verursacht durch das Verkratzen mit Stahlwolle, auf der Folienseite mit Polyester B (niedriger Schmelzpunkt), die unterhalb des Schmelzpunktes von Polyester B thermofixiert wurde, sowie die Kratzer auf der Polyester A-Seite bis zum Schmelzpunkt des Polyesters B bzw. Polyesters A erhalten.

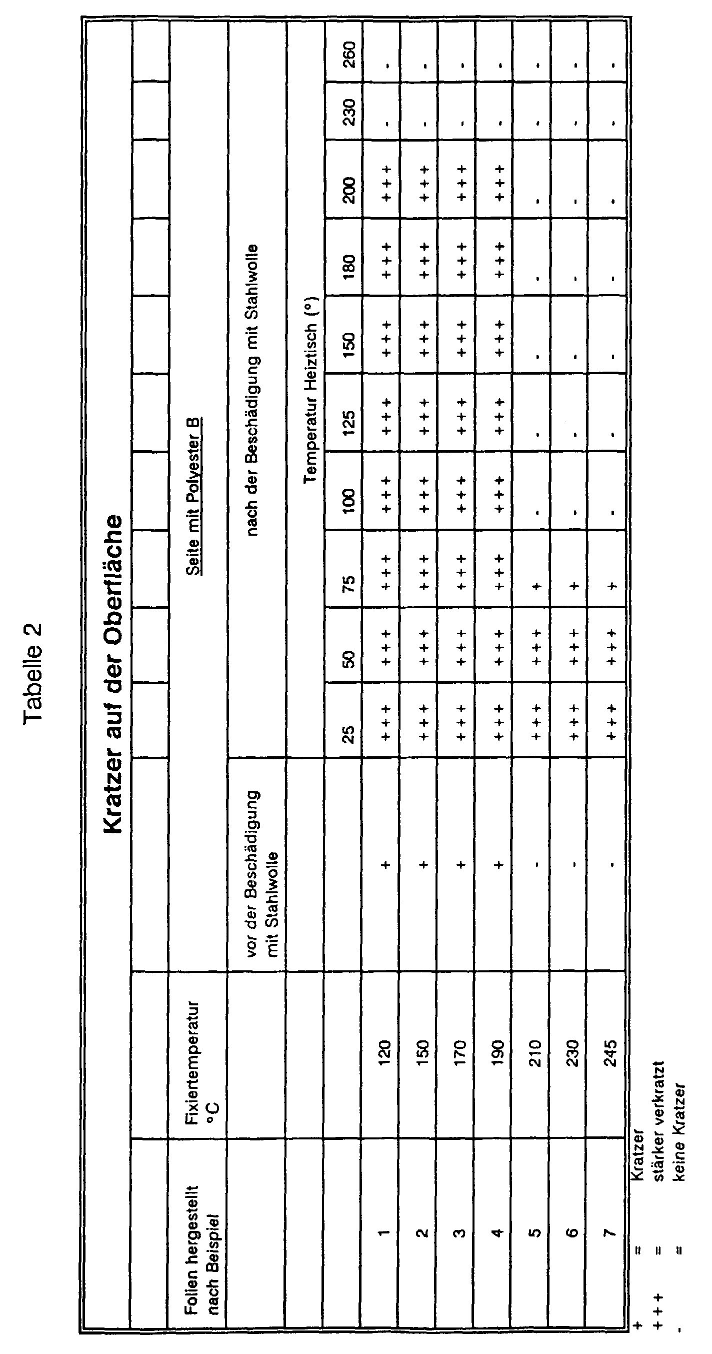

## Patentansprüche

1. Verfahren zur Entfernung von Kratzern, die während der Weiterverarbeitung auf einer biaxial orientierten, thermofixierten Mehrschichtfolie aus thermoplastischen Polyestermaterialien entstanden sind, wobei die Folie auf wenigstens einer Oberfläche einer Basisschicht aus thermoplastischem Polyester A eine Deckschicht aus einem Polyester B aufweist, der einen niedrigeren Schmelzpunkt besitzt als der Polyester A, dadurch gekennzeichnet, daß die mit Kratzern versehene Folie einer Wärmebehandlung bei einer Temperatur im Bereich von 70 bis 200 °C unterzogen wird, wodurch auf der Oberfläche der Deckschicht keine Kratzer von mehr als 3,0 mm Längsausdehnung und mehr als 10 µm Querausdehnung vorhanden sind.

2. Verfahren nach Anspruch 1, dadurch gekennzeichnet, daß der Polyester A einen Schmelzpunkt im Bereich von 230 bis 270 °C und der Polyester B einen Schmelzpunkt im Bereich von 120 bis 230 °C aufweist.

3. Verfahren nach Anspruch 1 oder 2, dadurch gekennzeichnet, daß der thermoplastische Polyester A der Basisschicht Polyethylenterephthalat ist, dem gegebenenfalls zur Verbesserung der Gleitfähigkeitseigenschaften in feiner Verteilung feste Teilchen zugesetzt werden können, insbesondere in einer Menge von 0 bis 30 Gew.-%, bevorzugt 0 bis 2 Gew.-%, jeweils bezogen auf das Gewicht des die Basisschicht bildenden Polyethylenterephthalats, wobei die mittlere Teilchengröße der festen Teilchen im Bereich von 0,3 bis 20 µm, bevorzugt von 0,5 bis 10 µm, liegt.

4. Verfahren nach einem der Ansprüche 1 bis 3, dadurch gekennzeichnet, daß die Schichtdicke der Basisschicht zwischen 2 und 500 µm, bevorzugt zwischen 5 und 150 µm, besonders bevorzugt zwischen 8 und 100 µm, liegt.

5. Verfahren nach einem der Ansprüche 1 bis 4, dadurch gekennzeichnet, daß der Polyester B der Deckschicht aus Polyethylenterephthalat- und Polyethylenisophthalateinheiten besteht, wobei der Isophthalatanteil im Bereich von 5 bis 95 Gew.-% liegt, bezogen auf das Gesamtgewicht des Copolyesters, bevorzugt von 5 bis 30 Gew.-%, besonders bevorzugt von 10 bis 20 Gew.-%.

6. Verfahren nach einem der Ansprüche 1 bis 5, dadurch gekennzeichnet, daß der Schmelzpunkt des Polyesters B der Deckschicht im Bereich von 190 bis 230 °C, bevorzugt von 190 bis 210 °C, liegt.

7. Verfahren nach einem der Ansprüche 1 bis 6, dadurch gekennzeichnet, daß dem Polyester B der Deckschicht in feiner Verteilung feste Teilchen eingelagert sind in einer Menge von 0 bis 30 Gew.-%, bevorzugt von 0 bis 3 Gew.-%, jeweils bezogen auf das Gesamtgewicht des Polyesters B, wobei der mittlere Teilchendurchmesser der eingelagerten Teilchen im Bereich von 0,1 bis 20 µm, bevorzugt im Bereich von 0,2 bis 5 µm, liegt.

8. Verfahren nach einem der Ansprüche 1 bis 7, dadurch gekennzeichnet, daß die Schichtdicke der Deckschicht wenigstens 0,01 µm beträgt, bevorzugt zwischen 0,1 bis 100 µm liegt, besonders bevorzugt zwischen 0,1 bis 40 µm.

9. Verfahren nach einem der Ansprüche 1 bis 8, dadurch gekennzeichnet, daß sowohl der Basisschicht als auch der Deckschicht zur Verbesserung der Gleiteigenschaften organische Additive mit einem im Vergleich zu den die Schichten bildenden Polyestern niedrigen Schmelzpunkt in einer Menge von 0 bis 10 Gew.-%, bevorzugt von 0 bis 5 Gew.-%, bezogen auf das Gesamtgewicht der die Schichten bildenden Polyester, zugesetzt sind, wobei die Additive ausgewählt sind aus der Gruppe Glycerinmono, -di- oder -triester, Fettsäuren, Ester von Fettsäuren, gesättigten organischen Säuren, ihre Ester und Salze, gesättigte und ungesättigte Organopolysiloxane.

10. Verfahren nach einem der Ansprüche 1 bis 9, dadurch gekennzeichnet, daß auf beiden Seiten der Basisschicht Deckschichten aufgebracht sind, wobei beide Deckschichten gleiche Zusammensetzung und gleiche Schichtdicken aufweisen.

## Claims

1. A process for the removel of scratches which have occurred during further processing on a biaxially oriented and thermoset multilayer film of thermoplastic polyesters, with the film comprising on at least one surface of a base layer of thermoplastic polyester A a cover layer of a polyester B, which has a lower melting point than polyester A, wherein the film showing scratches is subjected to a thermal treatment in the range of 70 to 200 °C, whereafter no scratches of more than 3.0 mm length and 10 µm in cross-section are present anymore on the surface of the cover layer.

2. Process as claimed in claim 1, wherein the polyester A has a melting point in the range of 230 to 270 °C, and the polyester B has a melting point in the range from 120 to 230 °C.

3. Process as claimed in claim 1 or 2, wherein the thermoplastic polyster A of the base layer comprises polyethylene terephthalate, which is optionally admixed with finely divided solid particles to improve its slip properties, particularly in an amount from 0 to 30 % by weight, preferably from 0 to 2 % by weight, in each case based on the weight of the polyethylene terephthalate forming the base layer, the average particle size of the solid particles being in the range from 0.3 to 20 µm, preferably from 0.5 to 10 µm.

4. Process as claimed in any of claims 1 to 3, wherein the base layer has a thickness ranging between 2 and 500 µm, preferably between 5 and 150 µm, particularly preferably between 8 to 100 µm.

5. Process as claimed in any of claims 1 to 4, wherein the polyester B forming the cover layer comprises polyethylene terephthalate units and polyethylene isophthalate units, the proportion of isophthalate being in the range from 5 to 95 % by weight, preferably from 5 to 30 % by weight, particularly preferably from 10 to 20 % by weight, based on the total weight of the copolyester.

6. Process as claimed in any of claims 1 to 5, wherein the melting point of polyester B forming the cover layer is in the range from 190 to 230 °C, preferably from 190 to 210 °C.

7. Process as claimed in any of claims 1 to 6, wherein finely divided solid particles are embedded in the polyester B forming the cover layer, in an amount from 0 to 30 % by weight, preferably from 0 to 3 % by weight, in each case based on the total weight of the polyester B, the average particle diameter of the embedded particles being in the range from 0.1 to 20 µm, preferably in the range from 0.2 to 5 µm.

8. Process as claimed in any of claims 1 to 7, wherein the cover layer has a thickness of at least 0.01 µm, preferably of 0.1 to 100 µm, particularly preferably of 0.1 to 40 µm.

9. Process as claimed in any of claims 1 to 8, wherein the base layer as well as the cover layer are admixed with organic additives in order to improve slip properties, the organic additives having low melting points, compared with the polyesters froming the layers, and being present in an amount from 0 to 10 % by weight, preferably from 0 to 5 % by weight, based on the total weight of the polyesters forming the layers and the additives being selected from the group consisting of glycerol monoesters, glycerol diesters and glycerol triesters, fatty acids, esters of fatty acids, saturated organic acids, the esters and salts thereof, saturated and unsaturated organopolysiloxanes.

10. Process as claimed in any of claims 1 to 9, wherein cover layers are applied to both sides of the base layer, the two cover layers having the same composition and the same layer thickness.

## Revendications

1. Procédé pour l'élimination de rayures résultant du traitement ultérieur d'une feuille multicouches thermofixée et orientée biaxialement, à base de polyester thermoplastique, selon lequel la feuille présente une couche de revêtement en un polyester B sur au moins l'une des faces d'une couche de base en polyester thermoplastique A, le polyester B présentant un point de fusion inférieur à celui du polyester A, caractérisé en ce que la feuille pourvue de rayures est soumise à un traitement à chaud à une température dans la plage de 70 à 200° C, à la suite de quoi aucune rayure de plus de 3,0 mm de longueur et de plus de 10 µm de largeur n'est présente sur la surface de la couche de revêtement.

2. Procédé selon la revendication 1, caractérisé en ce que le polyester A présente un point de fusion dans la plage de 230 à 270° C et le polyester B présente un point de fusion dans la plage de 120 à 230° C.

3. Procédé selon la revendication 1 ou 2, caractérisé en ce que le polyester thermo-plastique A de la couche de base est un poly(téréphtalate d'éthylène), auquel on peut éventuellement ajouter, pour en améliorer les propriétés de glissement, des particules solides finement divisées, avantageusement en une proportion de 0 à 30% en poids, de préférence de 0 à 2% en poids, chaque fois par rapport au poids du poly(téréphtalate d'éthylène) formant la couche de base, la taille moyenne des particules solides étant comprise dans la plage de 0,3 à 20µm, de préférence de 0,5 à 10 µm.

4. Procédé selon l'une des revendications 1 à 3, caractérisé en ce que l'épaisseur de la couche de base est comprise entre 2 et 500 µm, de préférence entre 5 et 150 µm, mieux encore entre 8 et 100 µm.

5. Procédé selon l'une des revendications 1 à 4, caractérisé en ce que le polyester B de la couche de revêtement se compose de motifs poly(téréphtalate d'éthylène) et poly(isophtalate d'éthylène), la partie isophtalate représentant de 5 à 95% en poids par rapport au poids total du copolyester, de préférence de 5 à 30 % en poids, plus particulièrement de 10 à 20 % en poids.

6. Procédé selon l'une des revendications 1 à 5, caractérisé en ce que le point de fusion du polyester B de la couche de revêtement se situe dans la plage de 190 à 230° C, de préférence de 190 à 210° C.

7. Procédé selon l'une des revendications 1 à 6, caractérisé en ce que l'on incorpore au polyester B de la couche de revêtement des particules solides finement divisées, en une proportion comprise entre 0 et 30 % en poids, de préférence 0 et 3 % en poids, chaque fois rapporté au total du polyester B, le diamètre moyen des particules incorporées se situant entre 0,1 et 20 µm, de préférence entre 0,2 et 5 µm.

8. Procédé selon l'une des revendications 1 à 7, caractérisé en ce que l'épaisseur de la couche de revêtement est d'au moins 0,01 µm, de préférence comprise entre 0,1 et 100µm, plus particulièrement entre 0,1 et 40 µm.

9. Procédé selon l'une des revendications 1 à 8, caractérisé en ce que l'on ajoute aussi bien à la couche de base qu'à la couche de revêtement, pour en améliorer les propriétés de glissement, des additifs organiques à bas point de fusion, par rapport au polyester formant les couches, en une proportion de 0 à 10 % en poids, de préférence de 0 à 5 % en poids, par rapport au poids total des polyesters formant les couches, lesdits additifs étant choisis dans le groupe formé par mono-, di- ou triesters de glycérol, acides gras, esters d'acide gras, acides organiques saturés, leurs esters et sels, organopolysiloxanes saturés et insaturés.

10. Procédé selon l'une des revendications 1 à 9, caractérisé en ce que l'on dépose des couches de revêtement sur les deux faces de la couche de base, lesdites couches de revêtement ayant la même composition et les mêmes épaisseurs de couche.
